# FASCICULE DE BREVET EUROPEEN

(11) **EP 3 727 897 B1**
(45) Date de publication et mention de la délivrance du brevet: **01.12.2021**
(21) Numéro de dépôt: 18839872.1
(22) Date de dépôt: 20.12.2018
(51) Int. Cl.: B60C 19/08, B60C 5/14

(54) **PNEUMATIQUE COMPRENANT UN CORDON CONDUCTEUR**
REIFEN MIT LEITFÄHIGEM KORD
TYRE COMPRISING A CONDUCTIVE CORD

(30) Priorité: 22.12.2017 FR 1771425; 22.12.2017 FR 1771426
(43) Date de publication de la demande: 28.10.2020
(73) Titulaire: Compagnie Générale des Etablissements Michelin, 63000 Clermont-Ferrand (FR)
(72) Inventeur: ORLOWSKI, Claude, 63040 Clermont-Ferrand Cedex 09 (FR); MUHLHOFF, Olivier, 63040 Clermont-Ferrand Cedex 09 (FR); MERINO, José, 63040 Clermont-Ferrand Cedex 09 (FR); PROST, Pascal, 63040 Clermont-Ferrand Cedex 09 (FR); QUADRINI, Matthieu, 63040 Clermont-Ferrand Cedex 09 (FR)
(74) Mandataire: Desbordes, Guillaume
(86) Numéro de dépôt international: PCT/IB2018/060420
(87) Numéro de publication internationale: WO 2019/123363

(56) Documents cités:
- EP-A1- 0 718 127
- EP-A2- 0 787 604
- DE-A1-102012 009 829
- FR-A- 1 198 271
- KR-A- 19980 033 597
- KR-B1- 100 285 608
- US-A- 2 641 294

## Description

### DOMAINE TECHNIQUE DE L'INVENTION

La présente invention concerne un pneumatique composé d'une carcasse, d'un bloc sommet sensiblement isolant et une bande de roulement sensiblement isolante. Elle concerne plus particulièrement un pneumatique dont la bande de roulement comporte également des éléments sensiblement conducteurs.

### ETAT DE LA TECHNIQUE ANTERIEURE

De manière générale, la résistivité électrique d'un pneumatique sur route doit être appréhendée en fonction de l'utilisation prévue du pneumatique. Ainsi certaines normes régissent les limites maximales de résistivité qu'un pneumatique donné doit comporter.

Les charges électrostatiques stockées par un véhicule en marche doivent pouvoir être évacuées de la roue vers le sol afin de rendre les pneumatiques conformes aux normes spécifiques. Selon la norme WDK110, les pneumatiques doivent présenter un caractère conducteur électrique minimal, lorsque leur conductivité est mesurée entre le sol et la roue. Le seuil maximal de résistance électrique s'élève à 1^{E}10 Ohm.

Or, l'utilisation de plus en plus courante de silice à la place du noir de carbone au sein des mélanges élastomères constituant les bandes de roulement et calandrages notamment, a pour conséquence de rendre ces portions de pneumatique isolantes. Tel est également le cas des mélanges faiblement constitués de noir de carbone. Par conséquent, et dans le but d'atténuer cet effet, différents agencements ont été prévus.

**Par** exemple, la demande de brevet DE19520996 concerne un pneumatique comportant une bande de roulement dont la première couche est sensiblement non conductrice, et dont l'une des couches inférieures est composée de matériaux conducteurs. Ladite couche sensiblement conductrice d'électricité s'étend radialement vers l'extérieur de la surface de contact avec le sol et est connectée à une seconde couche conductrice située sous la bande de roulement et reliée à la région du talon du pneumatique. Cet agencement est conducteur d'électricité.

Le document EP1533144 décrit un pneumatique dont le flanc comporte une couche de caoutchouc interne dont la conductivité électrique est élevée. Cette bande de caoutchouc interne s'étend radialement vers l'extérieur à partir de la portion de talon du pneumatique, jusqu'à l'une des couches de base de la bande de roulement. Ladite bande de caoutchouc permet ainsi de fournir une conductivité électrique accrue.

Le document EP1175992 décrit un procédé de fabrication d'une bande de roulement de pneumatique pourvue d'une couche conductrice d'électricité. Cette couche comporte un ruban en caoutchouc non vulcanisé, fortement conducteur d'électricité.

De même, la demande EP2193934 concerne un pneumatique dont la bande de roulement contient une bande en caoutchouc conductrice d'électricité. Cette couche conductrice s'étend radialement d'une couche de base de la bande de roulement vers l'extérieur de la bande de roulement. Cette couche entraîne une conductivité électrique à travers la couche non conductrice de la bande de roulement.

Selon ces diverses solutions, la conductivité électrique est assurée par l'agencement de couches conductrices. En outre, ces architectures obligent à recourir à l'ajout de couches spécifiquement conçues pour assurer la conductivité.

Une autre manière de maîtriser la conductivité électrique du pneumatique consiste par exemple, selon le document DE102011000361, en une méthode destinée à former un fil conducteur d'électricité. Ce fil conducteur est déroulé en continu à partir d'une bobine cylindrique, et est maintenu en position au moyen d'un élastique en forme de filet. Le fil est conducteur de par sa composition élastomère. Le fil conducteur est ensuite apposé sur un insert de carcasse de pneumatique afin d'améliorer la conductivité de la paroi latérale du pneumatique.

La demande EP2567833 concerne une nappe carcasse comprenant une pluralité de cordons de purge et de décharge ayant une conductivité électrique suffisante pour permettre de conduire une charge électrique à partir de la structure du pneumatique jusqu'à à une partie du talon du pneumatique, par l'intermédiaire de la nappe carcasse.

Le document FR2930192 décrit une nappe de renfort de pneumatique constituée d'un ensemble de fils enrobés d'un mélange caoutchoutique faiblement conducteur d'électricité. Une partie des fils sont enrobés d'un mélange caoutchoutique dont la couche externe est conductrice d'électricité. D'autres fils sont enrobés d'un mélange caoutchoutique dont la couche externe est très faiblement conductrice d'électricité. L'ensemble des fils est intercalé de manière à former un ou plusieurs passages conducteurs d'électricité entre la partie supérieure et la partie inférieure de la nappe.

La demande EP1621365 concerne un bandage de pneumatique en caoutchouc contenant au moins un cordon électriquement conducteur. Le cordon électriquement conducteur s'étend d'une surface externe du bourrelet du pneumatique à une couche interne de la bande de roulement. Un tel agencement permet de créer un passage électriquement conducteur entre la surface externe de la jante du pneumatique et la couche de base interne de la bande de roulement. Le cordon est constitué d'au moins un filament métallique conducteur enroulé en spirale autour d'un noyau disposé au centre d'au moins une fibre organique.

Les documents cités supra concernent le contrôle de la conductivité électrique de pneumatique par la mise en place de fils ou cordons matériellement conducteurs d'électricité. Ces fils et cordons s'étendent de manière générale à l'intérieur du pneumatique le long de différentes parois et impliquent des architectures particulières.

**Un** autre agencement conducteur d'électricité est par exemple, tel que décrit par le document DE102006050840, un pneumatique possédant une bande de roulement constituée d'une portion conductrice et d'une bobine constituée de couches de matériaux non conducteurs provenant d'un mélange composite. La couche la plus externe est composée de matériaux électriquement conducteurs entre sa partie extérieure et sa partie inférieure afin de produire un passage conducteur d'électricité.

La demande EP0658452 concerne également un pneumatique comportant un insert conducteur. L'insert conducteur est incorporé dans la bande de roulement du pneumatique, et s'étend selon une configuration annulaire, circonférentiellement autour de la bande de roulement. L'insert conducteur s'étend au travers de la largeur de la bande de roulement jusqu'à l'extérieur de la bande de roulement. L'insert a une conductivité électrique suffisante pour permettre aux charges électrostatiques stockées par le véhicule d'être évacuées vers le sol par le pneumatique.

Le document US6220319 décrit un pneumatique composé de caoutchouc présentant une résistance électrique élevée. La bande de roulement comporte un filament électrique conducteur qui s'étend de la surface intérieure à la surface extérieure de la bande de roulement. Un passage électriquement conducteur est créé à travers la bande de roulement.

La demande US2004069386 concerne un bandage pour pneumatique dont la bande de roulement est conductrice d'électricité. La bande de roulement est agencée avec une composition caoutchoutique électriquement résistante et un passage conducteur figurant dans la ceinture du pneumatique. En variante, un passage conducteur s'étend de la couche de ceinture jusqu'à une section de la carcasse du pneumatique.

Les documents ci-dessus décrivent divers moyens de maîtriser la conductivité électrique du pneumatique par la mise en place d'un insert moulé, conducteur d'électricité, agencé au travers de la bande de roulement.

Le document EP1659005 décrit un pneumatique dont les flancs sont constitués de matériaux très faiblement conducteurs d'électricité, et sont par ailleurs pourvus d'une bande conductrice de faible épaisseur et de faible largeur réalisée avec des matériaux conducteurs d'électricité et assurant la liaison entre la zone du sommet et la zone basse du pneumatique, afin d'assurer la transmission des charges électriques vers la roue du véhicule. En outre, la bande conductrice est agencée dans le flanc, à proximité immédiate de la couche axialement extérieure du flanc. Ce mode de réalisation permet d'assurer la fonction de conduction électrique, mais implique la mise en oeuvre d'une architecture spécifique pour permettre l'intégration des bandes conductrices sans affecter la pérennité du produit.

Le document FR3040017 décrit un pneumatique comprenant une carcasse, un bloc sommet sensiblement isolant, et une couche interne de bande de roulement radialement intérieure au sommet sensiblement isolant, une languette sensiblement conductrice constituée de matériaux élastomères et agencée radialement à travers la bande de roulement, le pneumatique comprenant également au moins un fil conducteur s'étendant entre l'extrémité radialement intérieure de la languette jusqu'à la couche conductrice la plus proche. La couche conductrice restant assez éloignée de la languette, le fil conducteur parcourt une distance assez importante dans le pneumatique afin de connecter les deux parties ensemble.

Le document NL2006420 décrit un pneumatique à bande de roulement faiblement conductrice comportant une couche interne conductrice relié à la surface externe de la bande de roulement par une pluralité de cheville conique implantées dans la bande de roulement, la partie élargie du cône étant susceptible de contacter le sol en roulage. La mise en place des chevilles comporte une étape de creusage de la bande de roulement pour aménager des logements destinés à positionner les chevilles. Une telle architecture implique la formation de zones de concentration de contraintes au niveau de la pointe des cônes des logements de chevilles. Ces zones de concentration de contrainte sont susceptibles de générer des fissures dans la bande de roulement.

Le document US2004069386 décrit un pneumatique dans le quel un ou plusieurs ponts conducteurs radiaux sont aménagés de façon à assurer une bonne conductivité entre la couche externe de la bande de roulement et les couches internes conductrices du pneumatique. Les ponts sont entièrement disposés dans le volume interne de la bande de roulement. Pour permettre d'assurer la conductivité à travers des nappes avec renforts, des ponts à sections multiples sont prévus. Ce type d'architecture est particulièrement complexe et coûteux à mettre en œuvre.

Le document US2641294 décrit un pneumatique pourvu de fils s'étendant entre la base des flancs et la zone centrale de la bande de roulement. Ces fils sont prévus pour assurer une bonne conductivité électrique. L'extrémité des fils traverse la bande de roulement pour contacter le sol. Une variante prévoit l'implantation de chevilles métalliques conductrices connectées aux fils, insérées dans la bande de roulement, avec une portion proéminente. Une telle architecture implique la formation de zones de concentration de contraintes au niveau du corps élargi des chevilles. Ces zones de concentration de contrainte sont susceptibles de générer des fissures dans la bande de roulement.

Le document KR100285608 décrit un procédé de fabrication de pneumatique adapté pour éliminer l'électricité statique. Une bande conductrice est prévue lors de la fabrication du pneumatique et permet de relier les différentes zones utiles au transport de l'électricité statique. L'électricité statique accumulée dans un véhicule est ainsi évacuée via un rebord de jante métallique et le pneumatique conducteur. Ainsi, l'électricité statique d'un véhicule est déchargée vers le sol via la prise de terre ainsi formée.

L'état de la technique révèle par conséquent une multitude d'agencements permettant le transfert des charges électriques de la roue d'un véhicule vers le sol. Pour autant, quelle que soit la manière dont la conductivité électrique est maîtrisée, la fabrication des différents pneumatiques reste complexe et coûteuse, tant pour l'agencement des différentes couches, pour la mise en place d'un cordon conducteur, que pour la fabrication d'un insert moulé au niveau de la bande de roulement.

Pour pallier ces différents inconvénients, l'invention prévoit différents moyens techniques.

### EXPOSE DE L'INVENTION

Tout d'abord, un premier objectif de l'invention consiste à prévoir une architecture de pneumatique conforme aux normes de sécurités.

Encore un objectif de l'invention vise à préserver la conductivité électrique en présence de différents composants, notamment isolants, de pneumatique.

Encore un objectif de l'invention consiste à prévoir un pneumatique disposant de bonnes caractéristiques de conductivité électrique, avec un impact minimal sur les caractéristiques mécaniques de ce pneumatique.

Enfin, un autre objectif de l'invention consiste à prévoir un procédé simple permettant l'installation d'éléments conducteurs entre certaines couches du pneumatique.

Pour ce faire, l'invention prévoit un pneumatique selon la revendication 1.

La cheville conductrice permet d'assurer une continuité électrique entre le sol et la jante. La mise en oeuvre n'a pas d'impact significatif sur l'architecture et la fabrication du pneumatique. Il est ainsi possible d'utiliser cette approche pour corriger à postériori des mises en œuvre dans lesquelles on constate une conductivité insuffisante. En outre, la cheville conductrice a un impact mécanique neutre sur le pneumatique. Sa masse et son épaisseur sont très faibles, de sorte que la cheville est sans effet perceptible sur le pneumatique, contrairement à la bande de matière élastomère de l'art antérieur qui crée une zone de surépaisseur et augmente la masse du pneumatique.

La ou les chevilles permettent d'assurer la conductivité soit entre le sol et un élément interne conducteur, soit entre un anneau conducteur et un élément interne conducteur, l'élément conducteur coopérant électriquement avec les chevilles. Cet élément conducteur s'étend entre les chevilles conductrices et une zone basse conductrice du pneumatique, assurant la conductivité vers une jante sur laquelle le pneumatique est monté.

Selon un mode de réalisation avantageux, l'élément interne conducteur est un ou une pluralité de cordons conducteurs. Le cordon conducteur est par exemple un filament de matériau conducteur ou de peinture ou autre enduit conducteur, appliqué à l'intérieur du pneumatique.

La cheville conductrice et le cordon peuvent être mis en place sur un pneumatique déjà manufacturé et vulcanisé afin d'obtenir une conductivité électrique pour les pneumatiques disposants de composants isolants.

Selon divers modes de réalisation, le cordon conducteur se prolonge sur la face intérieure du pneumatique jusque sous le talon ou encore jusqu'au niveau de la tringle. Dans le premier cas, le cordon assure la conductivité jusqu'à la jante sur laquelle le pneumatique est monté. Dans le second cas, une couche conductrice intermédiaire, en zone basse, assure la conductivité entre le cordon et la jante sur laquelle le pneumatique est monté.

En variante, l'élément interne conducteur est une couche interne du pneumatique, de préférence une couche d'étanchéité ou la carcasse du pneumatique. La couche interne est une couche classiquement intégrée lors de la fabrication d'un pneumatique. Selon les cas, cette couche interne peut être conductrice, par exemple grâce à la présence de charges du type noir de carbone ou autre conducteur. La présence d'une couche interne conductrice évite d'ajouter un cordon conducteur et simplifie la mise en œuvre.

De manière avantageuse, le cordon conducteur et/ou la cheville conductrice est constitué d'un mélange élastomère comprenant un élément conducteur, ou en thermoplastique élastomère conducteur. Le thermoplastique élastomère peut être chargé en noir de carbone ou autre conducteur comme par exemple le graphite, le graphème, ou un nanotube de carbone. Le thermoplastique élastomère conducteur peut aussi être utilisé pour réaliser la cheville conductrice.

En variante, le cordon conducteur est constitué de peinture conductrice.

Le cordon conducteur peut également être constituée en SBS, SIS, SIBS, SEBS ou TPU. Cette caractéristique permet d'appliquer le cordon après vulcanisation si besoin, car ces matériaux n'ont pas besoin de cuisson.

Selon un mode de réalisation avantageux, un anneau conducteur interne, avantageusement en matériau élastomère, relie électriquement l'ensemble des chevilles et débouche sur la surface radialement extérieure de la bande de roulement.

De manière avantageuse, la cheville conductrice se prolonge de chaque côté de l'anneau conducteur. On assure ainsi une excellente conductivité. Selon un mode de réalisation avantageux, la cheville conductrice se prolonge radialement extérieurement le long de l'anneau conducteur.

**Selon** un autre mode de réalisation, une pluralité de chevilles sont réparties circonférentiellement dans la bande de roulement du pneumatique et débouchent sur la surface radialement extérieure de la bande de roulement.

Selon l'invention, la tête de cheville a un diamètre au moins supérieur à 1.5 fois le diamètre de la tige de la cheville. Plus préférentiellement, la tête de cheville a un diamètre au moins supérieur à deux fois le diamètre de la tige de la cheville.

L'invention prévoit également un procédé de réalisation d'un pneumatique tel que préalablement décrit, dont la bande de roulement est non conductrice, afin de rendre ledit pneumatique conducteur, comprenant les étapes consistant à :
i) former au moins un logement dans la bande de roulement du pneumatique pour y disposer au moins une cheville ;
ii) positionner dans chaque logement au moins une cheville conductrice comportant une tête de cheville, de façon à ce que la tête de la cheville soit sous la bande de roulement;
iii) vulcaniser ledit pneumatique ou vulcaniser localement la cheville.
iii) vulcaniser ledit pneumatique ou vulcaniser localement la cheville.

Selon un mode de réalisation avantageux, le procédé comprend également une étape consistant à poser au moins un cordon conducteur à l'intérieur du pneumatique.

Selon encore un mode de réalisation avantageux, le procédé comprend également une étape consistant à poser un anneau périphérique interne.

### DESCRIPTION DES FIGURES

**Tous** les détails de réalisation sont donnés dans la description qui suit, complétée par les figures 1 à 5b, présentées uniquement à des fins d'exemples non limitatifs, et dans lesquelles :
- les figures 1a et 1b sont des vues en coupe d'une portion de pneumatique conforme à l'art antérieur ;
- la figure 2 est une coupe d'une section transversale d'un premier exemple de pneumatique selon l'invention ;
- la figure 3 est une coupe d'une même portion de pneumatique selon un autre exemple de réalisation de l'invention ;
- la figure 4 est une coupe d'une même portion de pneumatique selon encore un autre exemple de réalisation de l'invention ;
- les figures 5a et 5b illustrent divers exemples de pose de la cheville conductrice en relation avec l'anneau conducteur ;
- la figure 6 est une coupe d'une section transversale d'un autre exemple de pneumatique ;
- la figure 7 est une coupe d'une même portion de pneumatique selon encore un autre exemple de réalisation ;
- la figure 8 est une coupe d'une même portion de pneumatique selon encore un autre exemple de réalisation ;
- la figure 9 est une coupe axiale d'un exemple de réalisation comportant un cordon pour chaque cheville ;
- la figure 10 est une coupe axiale d'un exemple de réalisation comportant un anneau conducteur interne assurant la liaison électrique entre les chevilles et au moins un cordon.

### DESCRIPTION DETAILLEE DE L'INVENTION

### DEFINITION :

Par «sensiblement isolant », on entend, une conductivité électrique ayant pour effet que le pneumatique serait susceptible de se rapprocher du seuil minimal de conductivité tel que défini par la norme WDK110 préalablement évoquée.

**On** entend par « cheville » un élément qui, après mise en place dans le pneumatique, s'étend circonférentiellement sur une distance très faible par rapport au périmètre de la bande de roulement du pneumatique, et, transversalement, également, s'étend transversalement sur une distance très faible par rapport à la largeur de la bande de roulement.

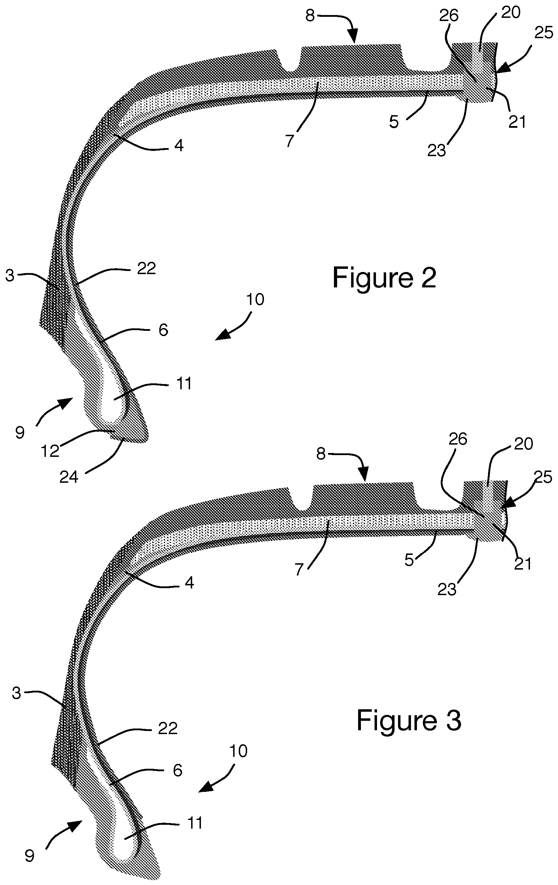

### Mode de réalisation des figures 2 à 5b

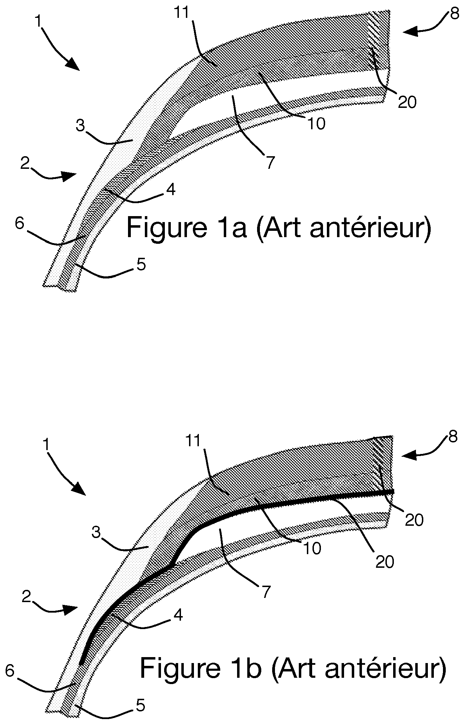

La figure 1 illustre un exemple de réalisation d'un pneumatique de type connu dans lequel la conductivité électrique à travers la bande de roulement isolante est assurée par un anneau conducteur 20 traversant la bande de roulement 8.

L'anneau conducteur 20 est composé de mélanges élastomères, traverse la bande de roulement 8 et assure la conductivité électrique depuis les couches internes conductrices vers le sol. Un tel agencement permet par conséquent d'obtenir un passage conducteur entre le sol et la roue du véhicule dès lors que le bloc sommet 8 et/ou le renfort d'épaule 4 du pneumatique, et/ou la carcasse 6, ainsi que le matériau élastomère en contact avec la jante, sont sensiblement conducteurs.

Toutefois, pour certaines architectures de pneumatiques, un tel agencement ne permet pas d'assurer une telle continuité électrique. Le recours de plus en plus fréquent à des mélanges élastomères comprenant de la silice pour former des couches internes du pneumatique rend les zones concernées moins conductrices. Les figures 2, 3 et 4 illustrent par exemple un pneumatique dans lequel le bloc sommet 8 est isolant. Dans ce cas, l'anneau conducteur 20 n'étant plus en contact avec un mélange élastomère conducteur, la continuité électrique n'est plus assurée.

L'introduction d'une cheville conductrice 21 sous la bande de roulement 8 du pneumatique 1, et en contact avec l'anneau conducteur 20, permet de connecter l'anneau 20 au mélange élastomère conducteur le plus proche.

La figure 2 illustre un mode de réalisation selon lequel la continuité électrique entre la cheville conductrice 21 et la jante est assurée par un cordon 22 s'étendant le long de la paroi interne du flanc 2 jusqu'au bourrelet 9 du pneumatique. Tel qu'illustré dans cet exemple, le cordon 22 comprend une portion 24 retournée sous le talon 12 du pneumatique. Cette portion 24 permet d'assurer un contact direct avec la jante, par exemple lorsque tout le flanc du pneumatique est constitué de matériaux non conducteurs. Une telle architecture favorise la conductivité du pneumatique 1 vers le sol à travers le bloc sommet 7, le long du flanc, jusqu'à la jante.

La figure 3 représente une variante de réalisation dans laquelle le cordon conducteur 22 s'étend sur la paroi interne du flanc 2 jusqu'à la zone de la tringle 11. Ce dernier mode de réalisation convient par exemple lorsque le mélange élastomère utilisé pour constituer la zone basse, en particulier le bourrelet 9, est conducteur, assurant ainsi la conductivité électrique entre la zone basse 10 et la jante sur laquelle le pneumatique est monté.

Le fait d'ajouter un cordon conducteur 22 en contact avec l'anneau 20 conducteur, agencé selon les représentations schématiques des figures 2 et 3, permet d'assurer une conductivité depuis la jante, puis jusqu'au sommet via le ou les cordons conducteurs, et à travers la bande de roulement par l'entremise de l'anneau conducteur 20, jusqu'au sol.

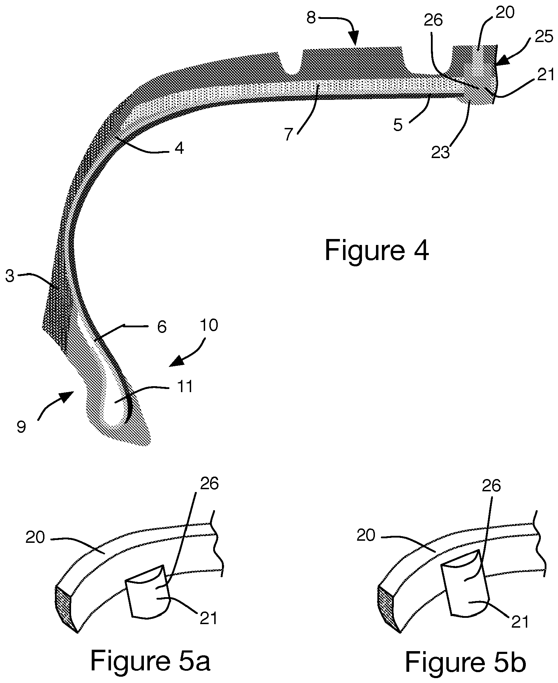

La figure 4 illustre une variante de réalisation selon laquelle la continuité électrique entre la cheville conductrice 21 et la jante est assurée par une couche interne 5 conductrice agencée le long de la paroi interne du pneumatique, d'un bourrelet 9 à l'autre, en passant par les flancs 2 la zone du sommet. Une telle architecture permet la conductivité entre la cheville conductrice 21 et la zone basse du pneumatique. Un matériau de la zone basse 10, également conducteur, assure ensuite la conductivité depuis la couche interne 5 jusqu'à la jante sur laquelle le pneumatique est monté.

Les figures 5a et 5b illustrent des exemples de mode de coopération électrique entre l'anneau périphérique 20 et la cheville 21. Dans l'exemple de la figure 5A, la cheville 21 est en contact avec la portion radialement intérieure de l'anneau 20. Dans l'exemple de la figure 5B, la cheville 21 est en contact avec la portion radialement intérieure de l'anneau 20 et se prolonge radialement extérieurement le long d'au moins un des côtés de l'anneau, pour ainsi assurer une meilleure conductivité électrique.

### PROCEDE DE REALISATION

Pour fabriquer un pneumatique avec un ou plusieurs chevilles 21 tel que préalablement décrit, un procédé de réalisation d'un pneumatique prévoit les étapes suivantes, consistant tout d'abord à percer l'intérieur de la bande de roulement du pneumatique à l'aide d'un outil adapté. L'étape suivante consiste à injecter une cheville conductrice dans le perçage réalisé. L'injection est effectuée à partir de la cavité du pneumatique. Si besoin, un ou plusieurs cordons conducteurs sont ensuite appliqués le long d'au moins un flanc. Ensuite, selon la cas, si le pneumatique est à l'état non vulcanisé, ce dernier passe à l'étape de moulage-cuisson, ou si le pneumatique est déjà vulcanisé, on procède à une réticulation locale des chevilles et/ou des cordons. Grâce à ces différentes possibilités, il est possible de configurer tel que préalablement décrit, afin de le rendre conducteur, un pneumatique nouvellement fabriqué ou encore un pneumatique préalablement manufacturé.

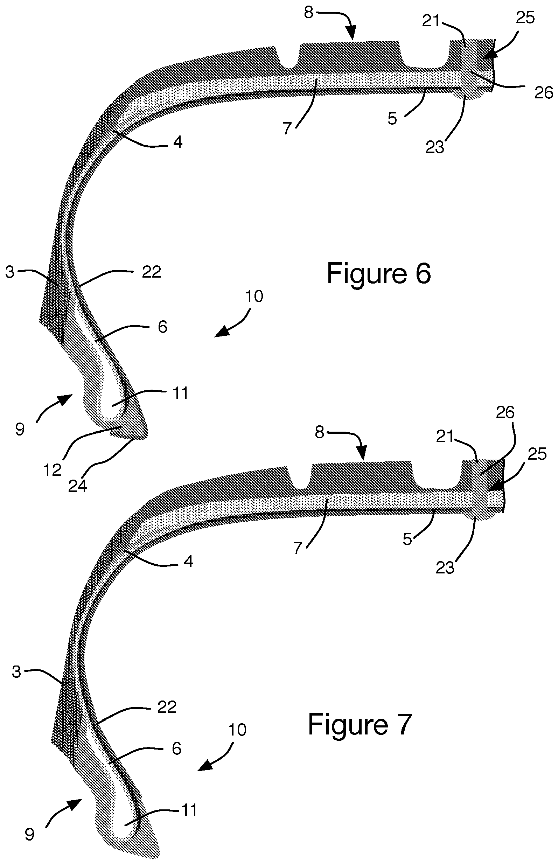

### Mode de réalisation des figures 6 à 10

**Tel** que présenté dans les exemples de réalisation des figures 6, 7 et 8, le pneumatique 1 comprend une pluralité de chevilles conductrices orientées dans le sens radial 21 réparties circonférentiellement dans la bande de roulement du pneumatique.

Compte tenu du fait que la bande de roulement est isolante, ces chevilles permettent d'assurer une conductivité électrique entre le sol et la portion interne du pneumatique.

Le nombre et la répartition des inserts sur la course circonférentielle de la bande de roulement sont prévus de façon à permettre qu'il y ait toujours au moins une cheville en contact avec le sol. De préférence, on prévoit au moins douze chevilles, soit une cheville à tous les 30 degrés. En variante, on prévoit un nombre plus élevé de chevilles, par exemple 20 chevilles, soit une cheville à tous les 18 degrés.

La figure 6 illustre un mode de réalisation selon lequel la continuité électrique entre les chevilles 21 et la jante est assurée par un ou de préférence une pluralité de cordons 22 s'étendant le long de la paroi interne du flanc 2 jusqu'au bourrelet 9 du pneumatique. Tel qu'illustré dans cet exemple, le cordon 22 comprend une portion 24 retournée sous le talon 12 du pneumatique. Cette portion 24 permet d'assurer un contact direct avec la jante, par exemple lorsque tout le flanc du pneumatique est constitué de matériaux non conducteurs. Une telle architecture favorise la conductivité du pneumatique 1 vers le sol à travers le bloc sommet 7, le long du flanc, jusqu'à la jante.

La figure 7 représente une variante de réalisation dans laquelle les cordons conducteurs 22 s'étendent sur la paroi interne du flanc 2 jusqu'à la zone de la tringle 11. Ce dernier mode de réalisation convient par exemple lorsque le mélange élastomère utilisé pour constituer la zone basse, en particulier le bourrelet 9, est conducteur, assurant ainsi la conductivité électrique entre la zone basse 10 et la jante sur laquelle le pneumatique est monté.

Le fait d'ajouter un ou des cordons conducteurs 22 en contact avec les chevilles 21 conductrices, agencées selon les représentations schématiques des figures 6 et 7, permet d'assurer une conductivité depuis la jante, puis jusqu'au sommet via le ou les cordons conducteurs, et à travers la bande de roulement par l'entremise des chevilles 21 jusqu'au sol.

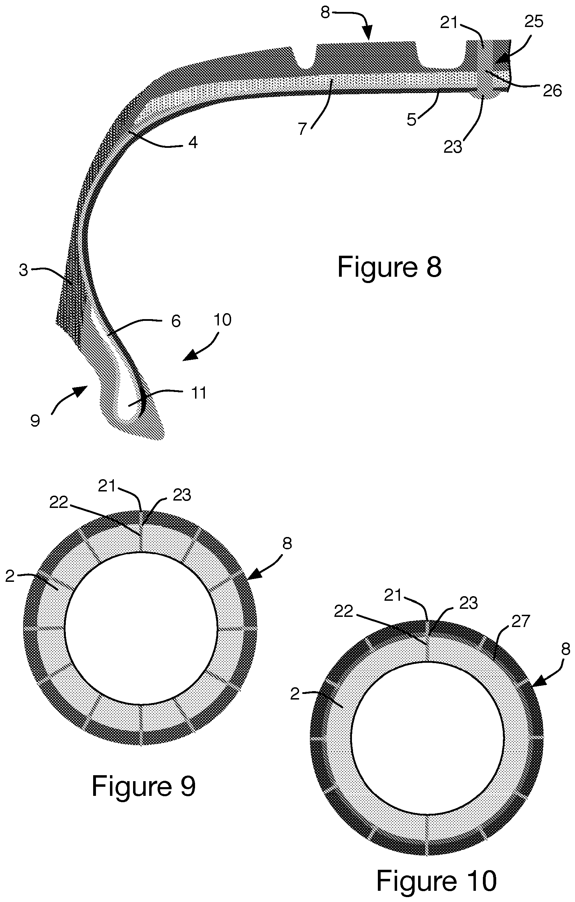

La figure 8 illustre une variante de réalisation selon laquelle la continuité électrique entre les chevilles 21 et la jante est assurée par une couche interne 5 conductrice agencée le long de la paroi interne du pneumatique, d'un bourrelet 9 à l'autre, en passant par les flancs 2 la zone sommet. Une telle architecture permet la conductivité entre les chevilles 21 et la zone basse du pneumatique. Un matériau de zone basse 10, également conducteur, assure ensuite la conductivité depuis la couche interne 5 jusqu'à la jante sur laquelle le pneumatique est monté.

La figure 9 illustre avec une coupe méridienne un exemple de répartition angulaire de chevilles 21 et de cordons 22, agencés dans la continuité des chevilles. Cet agencement prévoit un cordon aligné dans la continuité de chacune des chevilles.

La figure 10 illustre un autre exemple de réalisation dans lequel le pneumatique comprend un anneau conducteur interne 27 reliant au moins une partie et de préférence l'ensemble des chevilles 21. Dans un tel agencement, la continuité électrique vers la zone basse peut être assurée par un unique cordon conducteur 22 reliant l'anneau interne 20 à la zone basse du pneumatique. On utilise de préférence au moins deux cordons, équidistants angulairement, pour assurer la continuité dans les cas où un cordon serait endommagé.

### PROCEDE DE REALISATION

Pour fabriquer un pneumatique avec une ou plusieurs chevilles 21 tel que préalablement décrit, un procédé de réalisation d'un pneumatique prévoit les étapes suivantes, consistant tout d'abord à aménager une pluralité d'ouvertures radiales aux multiples positions prévues le long de la bande de roulement, à l'aide d'un outil adapté. Ensuite, l'étape suivante consiste à injecter, dans chacune des ouvertures, une cheville conductrice. Si besoin, un anneau conducteur interne est disposé.

Si besoin, un ou plusieurs cordons conducteurs sont ensuite appliqués le long d'au moins un flanc. Ensuite, selon le cas, si le pneumatique est à l'état non vulcanisé, ce dernier passe à l'étape de moulage-cuisson, ou si le pneumatique est déjà vulcanisé, on procède à une réticulation locale des chevilles et/ou des cordons.

Grâce à ces différentes possibilités, il est possible de configurer tel que préalablement décrit, afin de le rendre conducteur, un pneumatique nouvellement fabriqué ou encore un pneumatique préalablement manufacturé.

### CARACTERISTIQUES DES CHEVILLES

Dans les différents modes de réalisation illustrés, les chevilles conductrices 21 comportent une tige 26 en forme de corps cylindrique allongé, surmonté d'une tête 23 de cheville de diamètre supérieur à celui de la tige. Le diamètre de tête 23 corresponds à au moins 1.5 fois, et de préférence au moins deux fois le diamètre de la tige. La face interne de la tête est sensiblement plane pour bien s'appuyer contre la face interne de la cavité du pneumatique. Dans les exemples illustrés le profil externe de la tête est arrondi. En variante, la tête a un profil conique. Dans les exemples illustrés, les chevilles sont réalisées en élastomère thermoplastique (TPE) conducteur, c'est à dire dont la conductivité électrique est au moins cinq fois, et de préférence au moins dix fois supérieure à celle de la zone adjacente de la bande de roulement. Le thermoplastique élastomère peut être chargé en noir de carbone ou autre conducteur comme par exemple le graphite, le graphème, ou un nanotube de carbone.

### Supprimé

La résistivité d'un matériau est évaluée avec une éprouvette en utilisant l'expression : Résistivité (Wcm) = r = R S / L, dans laquelle R correspond à la résistance mesurée en Ohms (W), S correspond à la section de l'éprouvette en cm2 et L correspond à la longueur de l'éprouvette en cm.

La résistivité du matériau de la cheville est log r < 4 et préférentiellement log r < 3 et encore plus préférentiellement log r < 2.5.

**Numéros de référence employés sur les figures**

| | |
|---|---|
| 1 | Pneumatique |
| 2 | Flanc |
| 3 | Couche externe flanc |
| 4 | Renfort d'épaule |
| 5 | Couche interne (servant de préférence de couche couche d'étanchéité) |
| 6 | Carcasse |
| 7 | Bloc sommet |
| 8 | Bande de roulement |
| 9 | Bourrelet |
| 10 | Zone basse du pneumatique |
| 11 | Tringle |
| 12 | Talon |
| 20 | Anneau conducteur périphérique |
| 21 | Cheville conductrice |
| 22 | Cordon conducteur |
| 23 | Tête de la cheville |
| 24 | Portion retournée du cordon |
| 25 | Logement de cheville |
| 26 | Tige de cheville |
| 27 | Anneau conducteur interne |

## Revendications

1. Pneumatique (1) comprenant des flancs (2), un bloc sommet (7) sensiblement isolant électriquement et une bande de roulement (8) sensiblement isolante, le pneumatique (1) comprenant également au moins une cheville conductrice (21) orientée dans le sens radial et positionnée sous la bande de roulement (8) du pneumatique afin de créer un chemin conducteur électriquement entre le sol et une jante sur laquelle le pneumatique est susceptible d'être monté, ladite au moins une cheville
coopérant avec un élément interne (5, 22) conducteur du pneumatique susceptible d'assurer une conductivité électrique entre la ou les chevilles (21) et la zone basse (10) du pneumatique susceptible d'être en contact avec une jante sur laquelle ledit pneumatique peut être monté, dans lequel ladite au moins une cheville conductrice (21) est placée
dans un logement (25) affleurant la surface interne de la cavité du pneumatique, le pneumatique **caractérisé en ce que** ladite au moins une cheville conductrice (21) comporte une tête (23) de cheville agencée dans le
prolongement d'une tige (26) de cheville et disposée sous la bande de roulement du pneumatique, hors du logement (25), et dans lequel la tête de cheville (23) a un diamètre au moins supérieur à 1.5 fois le diamètre de la tige de ladite au moins une cheville.

2. Pneumatique (1) selon la revendication 1, dans lequel l'élément interne conducteur est un ou une pluralité de cordons conducteurs (22).

3. Pneumatique (1) selon la revendication 2, dans lequel le cordon conducteur (22) se prolonge sur la face intérieure du pneumatique jusqu'au niveau de la tringle (11) où se trouve un élément conducteur assurant la liaison électrique avec une jante, ou jusque sous le talon (12).

4. Pneumatique (1) selon la revendication 1, dans lequel l'élément interne conducteur est une couche interne (5, 6) du pneumatique, de préférence une couche d'étanchéité (5) ou la carcasse (6) du pneumatique.

5. Pneumatique (1) selon la revendication 1, comprenant une pluralité de chevilles, et comprenant également un anneau conducteur périphérique (20) reliant électriquement l'ensemble des chevilles (21) et débouchant sur la surface radialement extérieure de la bande de roulement.

6. Pneumatique (1) selon la revendication 5, dans lequel la cheville conductrice (21) se prolonge axialement de chaque côté de l'anneau conducteur (20).

7. Pneumatique selon la revendication 1, comprenant au moins 10 chevilles réparties circonférentiellement à égale distance angulaire l'une de l'autre dans la bande de roulement du pneumatique et débouchant sur la surface radialement extérieure de la bande de roulement.

8. Procédé de réalisation d'un pneumatique (1) selon la revendication 1, dont la bande de roulement est non conductrice, afin de rendre ledit pneumatique conducteur, comprenant les étapes consistant à :
i) former au moins un logement dans la bande de roulement du pneumatique (1) pour y disposer au moins une cheville (21) ;
ii) positionner dans chaque logement au moins une cheville (21) conductrice comportant une tête (23) de cheville, de façon à ce que la tête de la cheville soit sous la bande de roulement;
iii) vulcaniser ledit pneumatique ou vulcaniser localement la cheville.

9. Procédé de réalisation d'un pneumatique (1) selon la revendication 8, comprenant également une étape consistant à poser au moins un cordon conducteur (22) à l'intérieur du pneumatique.

10. Procédé de réalisation d'un pneumatique (1) selon la revendication 8, comprenant également une étape consistant à poser un anneau périphérique (20) reliant entre elles au moins une partie des chevilles.

## Patentansprüche

1. Reifen (1), welcher Seitenwände (2), einen im Wesentlichen elektrisch isolierenden Scheitelblock (7) und einen im Wesentlichen isolierenden Laufstreifen (8) umfasst, wobei der Reifen (1) außerdem wenigstens einen leitfähigen Stift (21) umfasst, der in der radialen Richtung ausgerichtet und unter dem Laufstreifen (8) des Reifens positioniert ist, um einen elektrisch leitenden Weg zwischen dem Boden und einer Felge, auf welcher der Reifen montierbar ist, zu erzeugen, wobei der wenigstens eine Stift mit einem leitfähigen inneren Element (5, 22) des Reifens zusammenwirkt, das geeignet ist, eine elektrische Leitfähigkeit zwischen dem oder den Stift(en) (21) und dem unteren Bereich (10) des Reifens sicherzustellen, der sich mit einer Felge in Kontakt befinden kann, auf welcher der Reifen montiert werden kann, wobei der wenigstens eine leitfähige Stift (21) in einer Aufnahme (25) angeordnet ist, die mit der Innenfläche des Hohlraums des Reifens bündig ist,
wobei der Reifen **dadurch gekennzeichnet ist, dass** der wenigstens eine leitfähige Stift (21) einen Stiftkopf (23) aufweist, der in der Verlängerung eines Stiftschaftes (26) ausgebildet ist und unter dem Laufstreifen des Reifens, außerhalb der Aufnahme (25), angeordnet ist, und wobei der Stiftkopf (23) einen Durchmesser aufweist, der wenigstens größer als das 1,5-Fache des Durchmessers des Schaftes des wenigstens einen Stiftes ist.

2. Reifen (1) nach Anspruch 1, wobei das leitfähige innere Element ein leitfähiger Kord (22) oder eine Vielzahl davon ist.

3. Reifen (1) nach Anspruch 2, wobei sich der leitfähige Kord (22) auf der Innenseite des Reifens bis an den Wulstkern (11), wo sich ein leitfähiges Element befindet, das die elektrische Verbindung mit einer Felge sicherstellt, oder bis unter den Wulst (12) verlängert.

4. Reifen (1) nach Anspruch 1, wobei das leitfähige innere Element eine innere Schicht (5, 6) des Reifens ist, vorzugsweise eine Dichtungsschicht (5) oder die Karkasse (6) des Reifens.

5. Reifen (1) nach Anspruch 1, welcher eine Vielzahl von Stiften umfasst und außerdem einen leitfähigen Umfangsring (20) umfasst, der die Gesamtheit der Stifte (21) elektrisch verbindet und auf der radial äußeren Fläche des Laufstreifens mündet.

6. Reifen (1) nach Anspruch 5, wobei der leitfähige Stift (21) auf jeder Seite des leitfähigen Ringes (20) axial verlängert ist.

7. Reifen nach Anspruch 1, welcher wenigstens 10 Stifte umfasst, die in Umfangsrichtung in gleichem Winkelabstand voneinander im Laufstreifen des Reifens verteilt sind und auf der radial äußeren Fläche des Laufstreifens münden.

8. Verfahren zur Herstellung eines Reifens (1) nach Anspruch 1, dessen Laufstreifen nicht leitfähig ist, um den Reifen leitfähig zu machen, die folgenden Schritte umfassend:
i) Ausbilden wenigstens einer Aufnahme im Laufstreifen des Reifens (1), um wenigstens einen Stift (21) dort anzuordnen;
ii) Positionieren wenigstens eines leitfähigen Stiftes (21) in jeder Aufnahme, der einen Stiftkopf (23) aufweist, derart, dass sich der Kopf des Stiftes unter dem Laufstreifen befindet;
iii) Vulkanisieren des Reifens oder lokales Vulkanisieren des Stiftes.

9. Verfahren zur Herstellung eines Reifens (1) nach Anspruch 8, welches außerdem einen Schritt des Anbringens wenigstens eines leitfähigen Kords (22) im Inneren des Reifens umfasst.

10. Verfahren zur Herstellung eines Reifens (1) nach Anspruch 8, welches außerdem einen Schritt des Anbringens eines Umfangsringes (20) umfasst, er wenigstens einen Teil der Stifte miteinander verbindet.

## Claims

1. Tyre (1) comprising sidewalls (2), a substantially electrically insulating crown block (7) and a substantially insulating tread (8), the tyre (1) also comprising at least one conductive peg (21) that is oriented in the radial direction and positioned under the tread (8) of the tyre so as to create an electrically conductive path between the ground and a rim on which the tyre is able to be mounted, said at least one peg cooperating with a conductive internal element (5, 22) of the tyre that is able to ensure electrical conductivity between the peg(s) (21) and the bottom region (10) of the tyre that is able to be in contact with a rim on which said tyre can be mounted, wherein said at least one conductive peg (21) is placed in a housing (25) flush with the internal surface of the cavity of the tyre, the tyre **characterized in that** said conductive peg (21) has a peg head (23) arranged in the continuation of a peg shank (26) and disposed under the tread of the tyre, outside the housing (25) and wherein the peg head (23) has a diameter at least more than 1.5 times the diameter of the shank of said at least one peg.

2. Tyre (1) according to claim 1, wherein the conductive internal element is one or a plurality of conductive cords (22).

3. Tyre (1) according to claim 2, wherein the conductive cord (22) extends over the interior face of the tyre as far as the region of the bead wire (11), where a conductive element is located that provides the electrical connection to a rim, or as far as beneath the heel (12).

4. Tyre (1) according to claim 1, wherein the conductive internal element is an internal layer (5, 6) of the tyre, preferably a sealing layer (5) or the carcass (6) of the tyre.

5. Tyre (1) according to claim 1, comprising a plurality of pegs and comprising an internal conductive ring (20) that electrically connects all of the pegs (21) and leads onto the radially outer surface of the tread.

6. Tyre (1) according to claim 5, wherein the conductive peg (21) is axially extending on each side of the conductive ring (20).

7. Tyre (1) according to claim 1, comprising at least ten pegs that are distributed circumferentially at an equal angular distance from one another in the tread of the tyre and lead onto the radially outer surface of the tread.

8. Method for producing a tyre (1) according to claim 1, the tread of which is not conductive, so as to make said tyre conductive, comprising the steps of:
i) forming at least one housing in the tread of the tyre (1) in order to dispose at least one peg (21) therein;
ii) positioning in each housing at least one conductive peg (21) having a peg head (23), such that the head of the peg is under the tread;
iii) vulcanizing said tyre or locally vulcanizing the peg.

9. Method for producing a tyre (1) according to Claim 8, also comprising a step of fitting at least one conductive cord (22) in the interior of the tyre.

10. Method for producing a tyre (1) according to claim 8, also comprising a step of fitting a peripheral ring (20) that connects at least some of the pegs together.
